# EUROPEAN PATENT APPLICATION

(11) **EP 3 135 515 A1**
(43) Date of publication of application: **01.03.2017**
(21) Application number: 16182544.3
(22) Date of filing: 03.08.2016
(51) Int. Cl.: B60H 1/00, B60H 1/32, F24F 13/22, F25D 21/14

(54) **DRAIN PAN STRUCTURE OF BUS AIR CONDITIONER FOR PREVENTING OVERFLOW OF CONDENSATE WATER**

(30) Priority: 03.08.2015 KR 20150109547
(71) Applicant: DongHwan Ind. Corp., Seoul (KR)
(72) Inventor: KO, Dong Hwan, Gyungsangnam-do (KR)
(74) Representative: Grünecker Patent- und Rechtsanwälte PartG mbB

(57) **Abstract**

Disclosed is a drain pan structure (300) having a drain pan storing and draining condensate water generated from an evaporator (230) installed in a casing (100) of the bus air conditioner (30), the drain pan structure (300) including: a bottom plate (311) provided at a position below the evaporator (230), the bottom plate (311) including: an inclined portion (312) having at least one surface having at least one downward inclination; and a drain channel (330) provided at an edge of a side direction of the bottom plate (311) and extending to distal ends of a side direction of the bottom plate (311) such that height of the drain channel (330) is lowest at the distal ends of the side direction of the bottom plate (311) so as to move the condensate water drained from the bottom plate (311), in a drain direction of the condensate water chamber (340).

## Description

### CROSS REFERENCE TO RELATED APPLICATION

The present application claims priority to Korean Patent Application No. 10-2015-0109547, filed August 3, 2015, the entire contents of which is incorporated herein for all purposes by this reference.

### BACKGROUND OF THE INVENTION

### Field of the Invention

The present invention relates generally to a drain pan of a bus air conditioner, the drain pan having a plurality of inclined portions. More particularly, the present invention relates to a drain pan structure of a bus air conditioner for preventing overflow of condensate water whereby condensate water can be promptly drained to the outside of a vehicle by providing a plurality of inclined portions having respective downward inclinations in the drain pan, and when the vehicle is strongly shaken while driving due to a speed bump, a sharply curved road, a steep sloping road, or a sudden stop, the condensate water stored in the drain pan can be prevented from being introduced into the vehicle.

### Description of the Related Art

Generally, in a variety of vehicles, for example, in a bus, an air conditioner is provided so as to maintain a pleasant temperature by lowering a temperature of inner space of the bus. Such an air conditioner is generally installed on a roof of the bus.

The air conditioner forcibly circulates external warm air by using a blower, and supplies cool air by cooling the external warm air to a predetermined temperature by use of a heat exchanger (for example, a compressor, a condenser, and an evaporator).

That is, when the external warm air is introduced into a vehicle by using the blower, the evaporator cools the external warm air by absorbing latent heat via vaporization of a refrigerant supplied from the condenser, and cooled air is supplied to inner space of the vehicle via an air vent.

In this case, when the evaporator absorbs heat from surrounding air, condensate water is generated in such a way that water of the surrounding air is condensed. Thus, it is necessary for a drain pan to be provided below the evaporator so as to the condensate water.

For example, Korean Utility Model Registration No. 20-0263638 discloses an integrated drain pan unit of an evaporator unit for a bus air conditioner in which when the drain pan unit including left and right drain pans having respective condensate water storing portions opposite to each other is installed on an outer casing of the evaporator unit, the left and right drain pans are integrally formed with a connector connecting first sides of the left and right drain pans to each other so that an air inlet is formed between the left and right drain pans of the drain pan unit. Thus, if any one of the left and right drain pans is coupled to a predetermined position, both the left and right drain pans may be installed in a state of being aligned with each other. Accordingly, the drain pan unit may be installed on an exact desired position, and thus an installation of the drain pan unit may be easily processed. Furthermore, since an evaporator is designed and is installed according to the drain pan unit installed on the exact desired position, the evaporator may be efficiently operated for cooling. Furthermore, the left and right drain pans may be easily moved and stored with the left and right drain pans being integrally connected to each other.

However, the integrated drain pan unit disclosed in Korean Utility Model Registration No. 20-0263638 is problematic as follows. Since the condensate water is collected in a portion in which the condensate water falls, drain efficiency of the condensate water is considerably decreased. Further, the condensate water may be introduced into a bus when the bus is strongly shaken while driving due to a speed bump, a sharply curved road, a steep sloping road, or a sudden stop.

Furthermore, displeasure of a driver or a passenger occurs because the condensate water introduced into the bus drips on the driver or passenger, and reliability of the product is considerably decreased.

Furthermore, manufacturing costs are increased due to a complicated structure of the drain pan, and a heat transfer area or a frontal area of a heat exchanger is narrower in such a way that height of the drain pan is raised. Thus, performance of an air conditioner is decreased.

### Document of Related Art

(Patent Document 1) Korean Utility Model Registration No. 20-0263638 (published on Aug. 5, 2000)

### SUMMARY OF THE INVENTION

Accordingly, the present invention has been made keeping in mind the above problems occurring in the related art, and the present invention is intended to propose a drain pan structure of a bus air conditioner for preventing overflow of condensate water whereby condensate water can be prevented from being introduced into a vehicle by providing an outer wall inside a drain pan.

Furthermore, the present invention is intended to propose the drain pan structure of a bus air conditioner for preventing overflow of condensate water whereby the condensate water generated in the bus air conditioner can be promptly drained to the outside of the vehicle.

Various problems to be solved by the present invention are not limited to the above described problems, and those skilled in the art will clearly appreciate that other problems that are not described may be solved by the below descriptions.

In order to achieve the above object, according to one aspect of the present invention, there is provided a drain pan structure of a bus air conditioner for preventing overflow of condensate water, the drain pan structure having a drain pan storing and draining condensate water generated from an evaporator installed in a casing of the bus air conditioner, the drain pan including: a bottom plate provided at a position below the evaporator, the bottom plate including: an inclined portion having at least one surface having at least one downward inclination; and a drain channel formed by extending to distal ends of a side direction of the bottom plate such that height of the drain channel is lowest at the distal ends of the side direction of the bottom plate so as to move the condensate water drained from the bottom plate, in a drain direction of the condensate water.

The inclined portion may include: a front inclined portion configured such that the bottom plate is downwardly inclined in a side direction or a front direction of a vehicle; and a rear inclined portion configured such that the bottom plate is downwardly inclined in the side direction or a rear direction of the vehicle.

Each of the front and rear inclined portions may include: a first inclined portion, a second inclined portion, and a third inclined portion, in which the first inclined portions of the front and rear inclined portions respectively have a first front inclined portion and a first rear inclined portion which are configured such that the bottom plate has a predetermined inclination in any one of left and right directions of the vehicle; the second inclined portions of the front and rear inclined portions respectively have a second front inclined portion and a second rear inclined portion, each having a ridgeline on a middle of the bottom plate, with downward inclination angles smaller than inclination angles of the first front and rear inclined portions, the second front and rear inclined portions being configured to have downward inclinations from the ridgeline in the front and rear directions of the vehicle, respectively; and the third inclined portions of the front and rear inclined portions respectively have a third front inclined portion and a third rear inclined portion which have downward inclination angles larger than the inclination angles of the first front and rear inclined portions, the third front and rear inclined portions extending from distal ends of the second front and rear inclined portions to the first front and rear inclined portions in the front and rear directions of the vehicle, respectively.

The second and third inclined portions may prevent the condensate water from being collected in the middle of the bottom plate by draining the condensate water in drain directions of the condensate water in front and rear directions of the vehicle.

The drain pan may further include a plurality of drain guides including: partition guides vertically provided on an upper surface of the bottom plate by extending in a side direction of a vehicle; and direction change guides extending from distal ends of the partition guides and being downwardly bent in a direction of the downward inclination of the inclined portion of the bottom plate.

The drain guides may include: a plurality of front drain guides provided on the front inclined portion by bending the direction change guides in a front direction of the vehicle; and a plurality of rear drain guides provided on the rear inclined portion by bending the direction change guides in a rear direction of the vehicle.

The drain pan may further include: a condensate water chamber provided at each of opposite ends of the bottom plate, and configured in a stepped shape having a layer formed on a position below the first inclined portion so as to accommodate drained condensate water.

The drain pan may further include: at least one drain pipe for draining the condensate water of the condensate water chamber, the drain pipe being formed by any one of a horizontal drain pipe, an inclined drain pipe, and a vertical drain pipe depending on an inclination of the drain direction of the condensate water.

According to the drain pan structure of a bus air conditioner for preventing overflow of condensate water of the present invention, it is advantageous as follows. The condensate water can be promptly drained to the outside of a vehicle by providing a plurality of inclined portions having respective downward inclinations in a drain pan, and when the vehicle is strongly shaken while driving due to a speed bump, a sharply curved road, a steep sloping road, or a sudden stop, the condensate water stored in the drain pan can be prevented from being introduced into the vehicle.

Furthermore, the condensate water can be more promptly drained to the outside of the vehicle by providing a plurality of drain guides in the drain pan.

Furthermore, the drain pan structure of the present invention can be widely utilized in various fields using an air conditioner by improving drainage of condensate water.

Furthermore, it can be fully understood to those skilled in the art that various effects of the drain pan structure of the present invention that are not described in detail can be provided.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a schematic diagram illustrating a cooling circuit and an electric circuit of a bus air conditioner using a drain pan structure of a bus air conditioner for preventing overflow of condensate water according to an embodiment of the technical spirit of the present invention;
FIG. 2 is a perspective view illustrating a state where the bus air conditioner using the drain pan structure according to the embodiment of the technical spirit of the present invention is coupled to a bus;
FIG. 3 is a perspective view illustrating the entire bus air conditioner using the drain pan structure according to the embodiment of the technical spirit of the present invention;
FIG. 4 is a perspective view illustrating a coupled state of a casing and a drain pan of the bus air conditioner in a state where an evaporator is separated from the bus air conditioner;
FIG. 5 is a side sectional view of an inclined portion of the drain pan taken along line B-B of the bus air conditioner of FIG. 4;
FIG. 6 is a side sectional view of the inclined portion of the drain pan taken along line A-A of the bus air conditioner of FIG. 4;
FIGS. 7 and 8 are partial sectional views of the bus air conditioner in a state where drain guides are provided on the drain pan;
FIG. 9 is a partial sectional view illustrating partition guides and direction change guides of the drain guides of the drain pan of the bus air conditioner;
FIG. 10 is a partial sectional view illustrating a flow of the condensate water by the drain guides of the bus air conditioner;
FIG. 11 is a top sectional view illustrating arrangements of the drain pipes of the bus air conditioner;
FIG. 12 is a view illustrating horizontal and inclined drain pipes of the bus air conditioner that are provided in left and right directions of the vehicle;
FIG. 13 is a view illustrating a vertical drain pipe provided in a vertically downward direction of a drain channel of the bus air conditioner; and
FIG. 14 is a view illustrating horizontal and inclined drain pipes of the bus air conditioner that are provided in
front and rear directions of the vehicle.

### DETAILED DESCRIPTION OF THE INVENTION

Hereinbelow, exemplary embodiments of the present invention will be described in detail with reference to the accompanying drawings.

Hereinafter, when specific structural and functional descriptions of the related art unnecessarily make the subject matter of the present invention unclear, the specific structural and functional descriptions of the related art will be omitted.

Since embodiments according to the concept of the present invention can be variously modified in many different forms, exemplary embodiments of the present invention are described in detail for illustrative purposes with reference to the accompanying drawings. However, the present invention is not limited thereto, and it should be understood that various modifications, additions and substitutions of the present invention are possible, without departing from the scope and spirit of the present invention.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between", "directly between", "adjacent to", or "directly adjacent to" should be construed in the same way.

The terminology used herein is for the purpose of describing particular embodiments only and is not intended to limit the present invention. As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

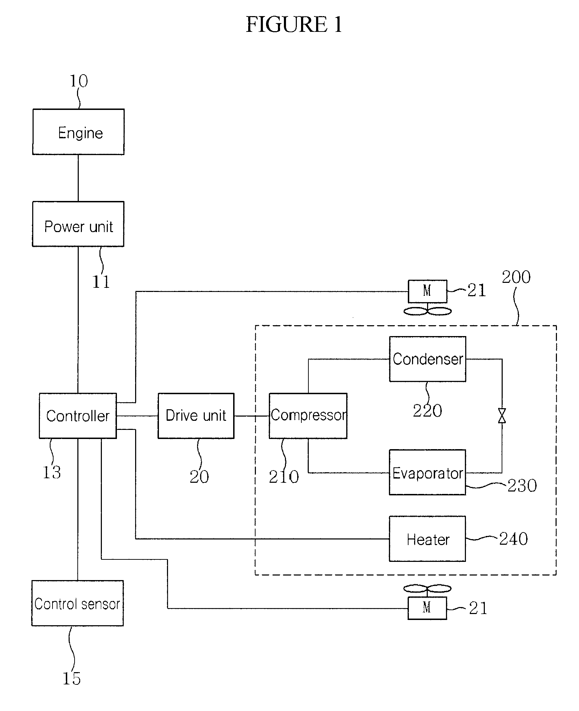

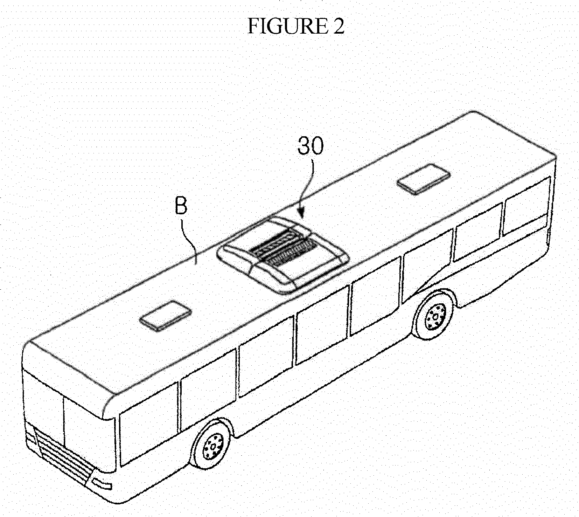

FIG. 1 is a schematic diagram illustrating a cooling circuit and an electric circuit of a bus air conditioner using a drain pan structure of a bus air conditioner for preventing overflow of condensate water according to an embodiment of the technical spirit of the present invention, and FIG. 2 is a perspective view illustrating a state where the bus air conditioner using the drain pan structure according to the embodiment of the technical spirit of the present invention is coupled to a bus.

As shown in FIGS. 1 and 2, the cooling and electric circuits of the bus air conditioner 30 according to the embodiment of the technical spirit of the present invention are configured such that power obtained from an engine 10 of a vehicle B is transmitted to a power unit 11, an electrical signal generated from the power unit 11 is transmitted to a controller 13, and a drive unit 20 and a blower 21 are electrically connected to the controller 13. The drive unit 20 and the blower 21 may be manually controlled at the controller 13 by a user. A temperature in the vehicle B may be automatically controlled by detecting the temperature in the vehicle B via a control sensor 15 installed in the vehicle B.

The drive unit 20 driven by power transmitted from the controller 13 drives a compressor 210, and a cold wind cooled by a heat exchanger 200 is moved into the vehicle B by the blower 21. Thus, cooling, heating, and ventilation of indoor air are performed.

As shown in FIG. 2, the bus air conditioner 30 described above is mounted on an upper surface of the bus B.

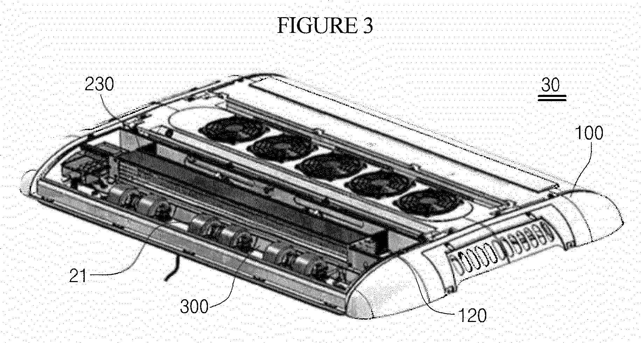

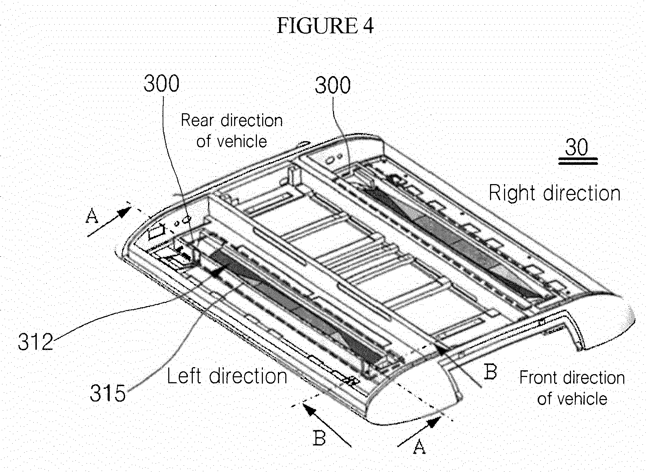

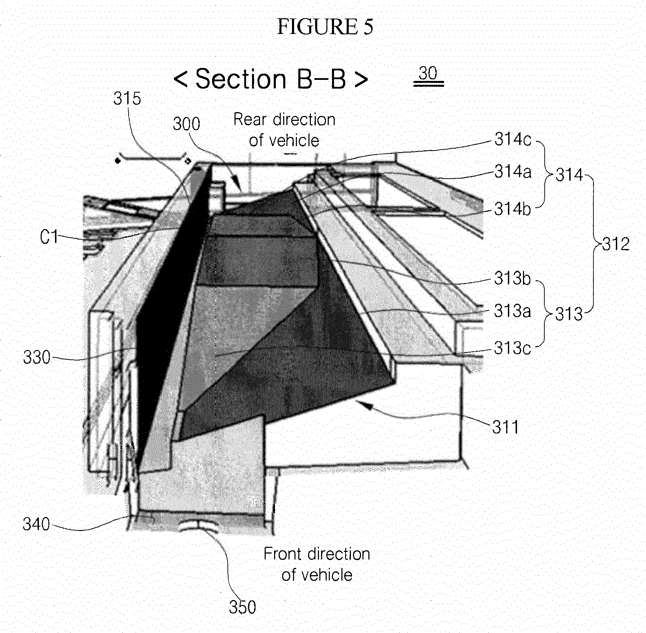

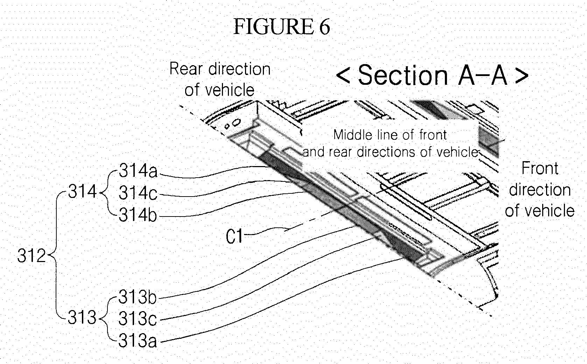

FIG. 3 is a perspective view illustrating the entire bus air conditioner 30 using the drain pan structure according to the embodiment of the technical spirit of the present invention, FIG. 4 is a perspective view illustrating a coupled state of a casing 100 and a drain pan 300 of the bus air conditioner 30 in a state where an evaporator 230 is separated from the bus air conditioner 30, FIG. 5 is a side sectional view of an inclined portion of the drain pan 300 taken along line B-B of the bus air conditioner 30 of FIG. 4, and FIG. 6 is a side sectional view of the inclined portion of the drain pan 300 taken along line A-A of the bus air conditioner 30 of FIG. 4.

As shown in FIG. 3, the bus air conditioner 30 includes the casing 100. Further, the heat exchanger 200, the blower 21, and the drain pan 300 according to the embodiment of the present invention, which are shown in FIG. 1, are provided in the casing 100.

The casing 100 is provided on the upper surface of the vehicle B, and fixes components of the bus air conditioner 30, such as the heat exchanger 200, the drain pan 300, and the blower 21, to the vehicle B so as to protect the components from external impact. The casing 100 may move a cold or warm wind generated from the bus air conditioner 30 into the vehicle via an air vent provided in the vehicle.

The heat exchanger 200 is a device for heat exchange between evaporation heat of refrigerant and surrounding air, or coolant heat of the engine and surrounding air. That is, the heat-exchanged air is moved into the vehicle for cooling in summer, or heating in winter. Thus, and an inner space of the vehicle B may be maintained at a pleasant temperature. The heat exchanger 200 may include the compressor 210, a condenser 220, the evaporator 230, and a heater 240.

The compressor 210 may move refrigerant to the condenser 220 via a refrigerant pipe by compressing the refrigerant with high temperature and high pressure by power supplied from the drive unit 20.

The condenser 220 may condense the refrigerant supplied from the compressor 210 into liquid by external air, and may move the liquid to the evaporator 230 via an expansion valve.

The evaporator 230 may lower a temperature of surrounding air by absorbing external heat in such a way that the evaporator 230 evaporates the liquid supplied from the condenser 220.

In this case, a cold wind is moved into the vehicle B by using the blower 21 for cooling in the vehicle B.

The heater 240 may move a warm wind in the vehicle B in winter for heating in the vehicle B. In this case, the heater 240 may heat an inner space of the vehicle B by using coolant heat obtained from the engine 10.

Since a configuration of the heat exchanger 200 of the bus air conditioner 30 according to the embodiment of the technical spirit of the present invention is publicly known to those skilled in the art, detailed descriptions of operation methods of the heat exchanger are omitted.

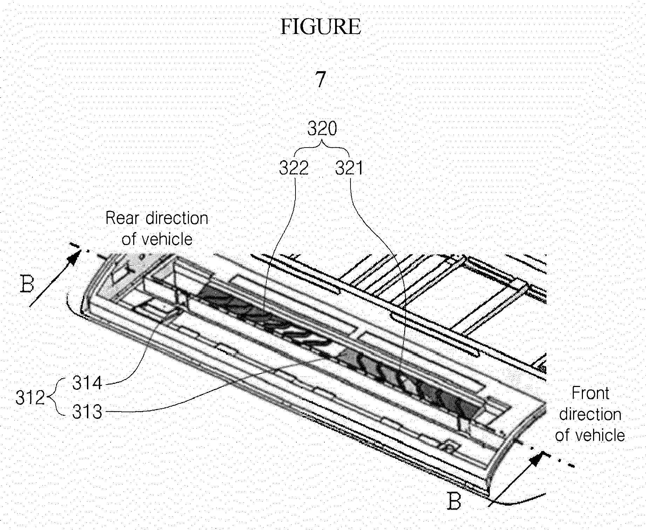

In the bus air conditioner 30 according to the embodiment of the technical spirit of the present invention, the drain pan 300 is provided at a position below the evaporator 230 so as to store condensate water generated from the evaporator 230, and drain the condensate water via drain pipes. The drain pan 300 may include the bottom plate 311 including an inclined portion 312, an outer wall 315, a drain channel 330, a condensate water chamber 340, drain guides 320 (shown in FIGS. 7 to 10), and the drain pipes 350.

The bottom plate 311 includes the inclined portion 312 having a plurality of inclined surfaces having respective downward inclinations. Thus, the condensate water is prevented from being collected in the middle of the bottom plate 311, and is promptly drained into the condensate water chamber 340.

As shown in FIGS. 5 and 6, the inclined portion 312 includes a front inclined portion 313 configured such that parts of the bottom plate 311 are downwardly inclined in a side direction or a front direction of the vehicle, and a rear inclined portion 314 configured such that parts of the bottom plate 311 are downwardly inclined in the side direction or a rear direction of the vehicle.

The front inclined portion 313 may include a first front inclined portion 313a, a second front inclined portion 313b, and a third front inclined portion 313c depending on an inclined direction and the extent of downward inclination. The rear inclined portion 314 may include a first rear inclined portion 314a, a second rear inclined portion 314b, and a third rear inclined portion 314c depending on an inclined direction and the extent of downward inclination. In the embodiment of the present invention, the first front and rear inclined portions 313a and 314a are called the first inclined portion 313a and 314a, the second front and rear inclined portions 313b and 314b are called the second inclined portion 313b and 314b, and the third front and rear inclined portions 313c and 314c are called the third inclined portion 313c and 314c.

In the embodiment of the present invention, the first front and rear inclined portions 313a and 314a meet at the middle of the bottom plate on which a ridgeline C1 is formed. Further, the first front and rear inclined portions 313a and 314a are configured to have a predetermined downward inclination in a side direction adjacent to one of left and right directions of the vehicle. The lower ends of the first front and rear inclined portions 313a and 314a meet the drain channel 330.

Thereafter, the second front and rear inclined portions 313b and 314b meet at the middle of the bottom plate on which the ridgeline C1 is formed. Further, the second front and rear inclined portions 313b and 314b are configured to have predetermined downward inclinations in the front and rear directions of the vehicle, respectively. In this case, the predetermined downward inclinations extend from the ridgeline C1 toward the front and rear directions of the vehicle B, and have downward inclination angles smaller than inclination angles of the first front and rear inclined portions 313a and 314a.

Thereafter, the third front and rear inclined portions 313c and 314c extend from distal ends of the second front and rear inclined portions 313b and 314b in the front and rear directions of the vehicle, respectively, so that distal ends of the third front and rear inclined portions 313c and 314c meet the first front and rear inclined portions 313a and 314a. Further, the third front and rear inclined portions 313c and 314c have downward inclination angles larger than the inclination angles of the first inclined portion 313a and 314a.

As described, an inclined protrusion is formed in the middle of the bottom plate 311 by protruding and extending from the first front and rear inclined portions 313a and 314a. Further, the inclined protrusion is connected to the first front and rear inclined portions 313a and 314a in an area near the condensate water chamber 340 via the third front and rear inclined portions 313c and 314c. Thus, the inclined protrusion is formed by protruding by a predetermined height from the first inclined portion 313a and 314a, and by extending in the front and rear directions of the vehicle in a state of having downward inclinations. As described, the condensate water collected in the middle of the drain pan 300 is naturally introduced toward the condensate water chamber 340 by the inclined protrusion formed by the second inclined portion 313b and 314b and the third inclined portion 313c and 314c. Thus, the condensate water is prevented from being collected in the middle of the drain pan 300.

The outer wall 315 prevents the condensate water collected in the drain pan 300 from overflow to an outside of the drain pan 300 by providing the outer wall 315 around the drain pan 300.

The drain channel 330 is provided at an edge of a side direction of the bottom plate 311, and extends in the front and rear directions of the vehicle by having downward inclinations toward the condensate water chambers 340 at distal ends of the bottom plate 311 such that height of the drain channel 330 is lowest among the components of the bottom plate 311 except the condensate water chamber 340 so as to move the collected condensate water to the condensate water chamber 340.

The condensate water chamber 340 is configured in a stepped shape having a layer of which the height is lower than the height of the drain channel 330 that is lowest at the distal ends of the bottom plate 311, i.e., drain directions of the condensate water, so as to store the condensate water. Thus, the condensate water is prevented from being collected in the inclined portion 312 and the drain channel 330, and the condensate water is easily drained via the drain pipes 350.

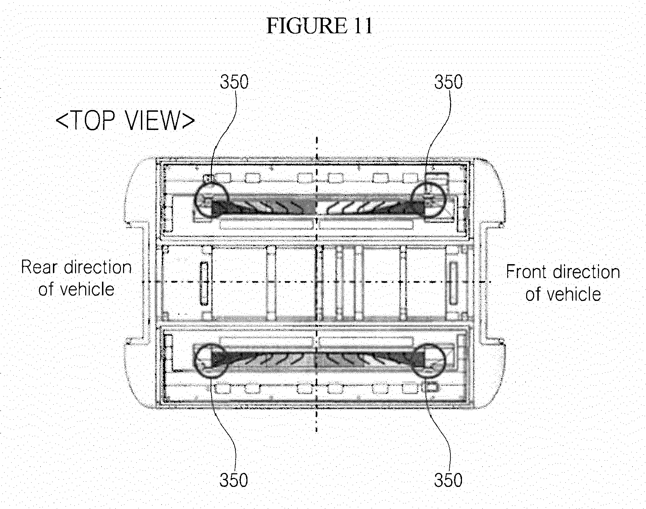

The drain pipes 350 that drain the condensate water stored in the condensate water chamber 340 to the outside of the vehicle are described later in detail with reference to FIGS. 11 to 14.

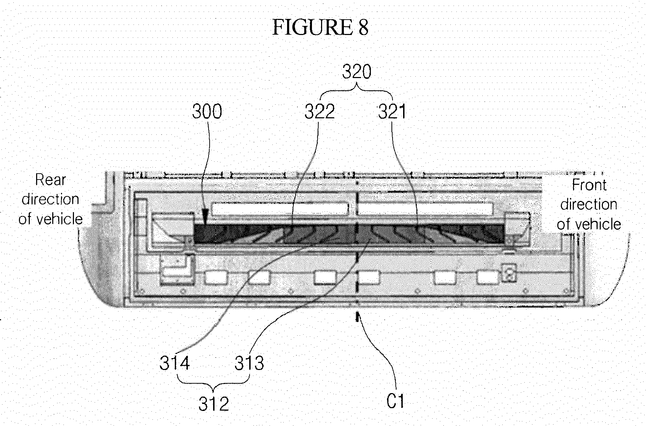

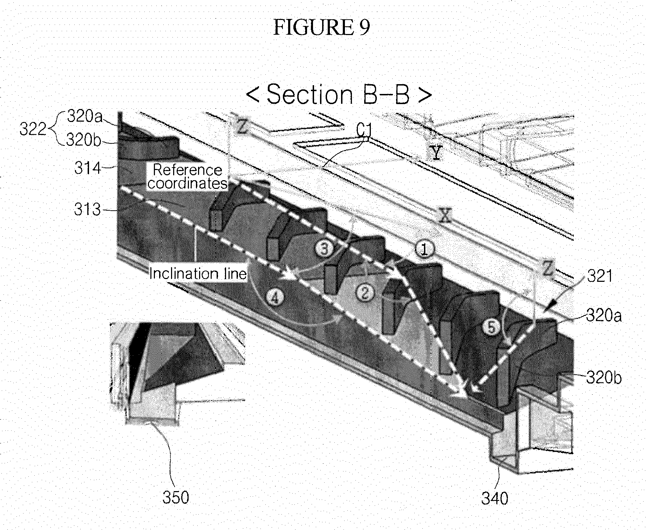

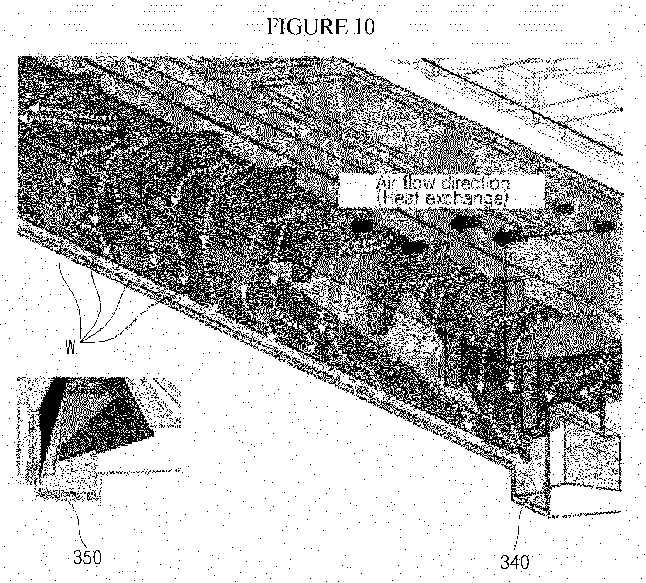

FIGS. 7 and 8 are partial sectional views of the bus air conditioner 30 in a state where the drain guides 320 are provided on the drain pan 300, FIG. 9 is a partial sectional view illustrating partition guides 320a and direction change guides 320b of the drain guides 320 of the drain pan 300 of the bus air conditioner 30, and FIG. 10 is a partial sectional view illustrating a flow W of the condensate water by the drain guides 320 of the bus air conditioner 30.

As shown in FIGS. 7 and 8, the drain pan 300 having a structure shown in FIGS. 3 to 6 may further include the drain guides 320.

The drain guides 320 include the partition guides 320a being vertically provided on an upper surface of the bottom plate 311, and extending in the side direction of the vehicle B; and the direction change guides 320b extending from distal ends of the partition guides 320a, and being downwardly bent in a direction of the downward inclination of the inclined portion 312 of the bottom plate 311.

In this case, the plurality of drain guides 320 provided on the front inclined portion 313 are called front drain guides 321, and the plurality of drain guides 320 provided on the rear inclined portion 314 are called rear drain guides 322.

As shown in FIGS. 9 and 10, the direction change guides 320b formed on the front drain guides 321 are bent from the distal ends of the partition guides 320a in the front direction of the vehicle. Thus, the condensate water generated in the middle of the bottom plate 311 is introduced toward the condensate water chamber 340 provided in the front direction of the vehicle. Further, the direction change guides 320b formed on the rear drain guides 322 are bent from the distal ends of the partition guides 320a in the rear direction of the vehicle. Thus, the condensate water generated in the middle of the bottom plate 311 is introduced toward the condensate water chamber 340 provided in the rear direction of the vehicle. FIG. 10 is a view illustrating the flow W of the condensate water. That is, FIG. 10 illustrates that the condensate water is introduced toward the condensate water chamber 340 by the drain guides 320.

As described, the drain guides 320 prevent the condensate water from collecting in the middle of the bottom plate 311, and increase drain efficiency. Thus, the condensate water is prevented from overflow from the drain pan 300.

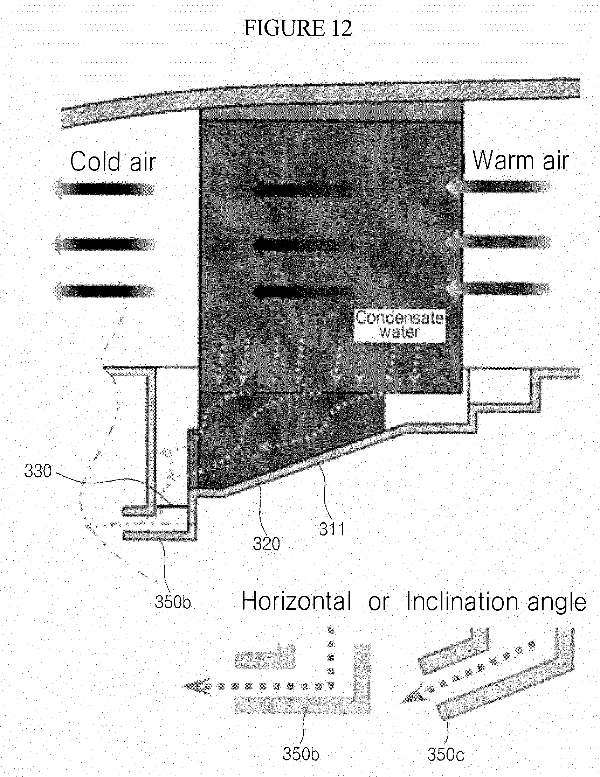

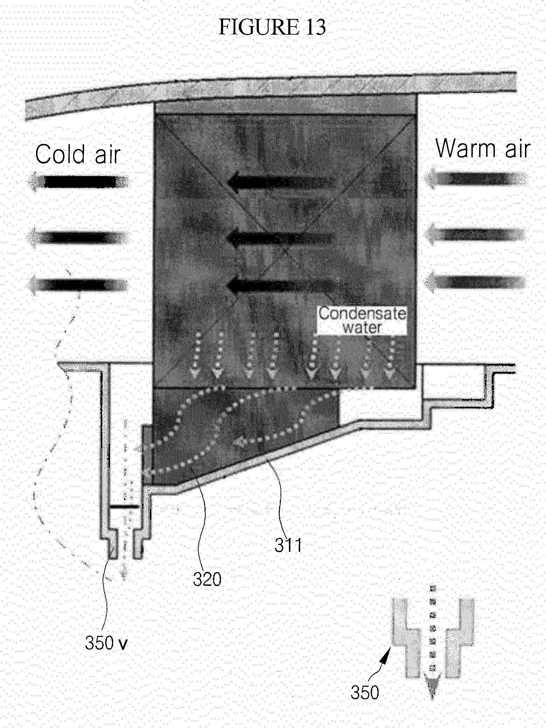

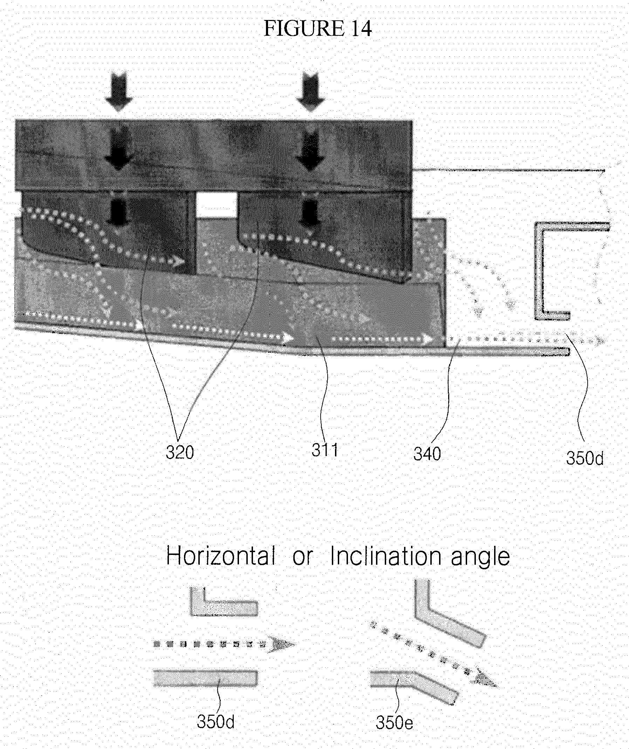

FIG. 11 is a top sectional view illustrating arrangements of the drain pipes 350 of the bus air conditioner 30, FIG. 12 is a view illustrating horizontal and inclined drain pipes 350b and 350c of the bus air conditioner 30 that are provided in the left and right directions of the vehicle, FIG. 13 is a view illustrating a vertical drain pipe 350v provided in a vertically downward direction of the drain channel of the bus air conditioner, and FIG. 14 is a view illustrating horizontal and inclined drain pipes 350d and 350e of the bus air conditioner 30 that are provided in the front and rear directions of the vehicle.

As shown in FIG. 11, the drain pipes 350 may be provided in at least four positions of the drain pan 300 of the present invention.

As shown in FIG. 12, when the drain pipes 350 are provided in the drain channel 330 or the condensate water chamber 340 so as to drain the condensate water from the condensate water chamber 340 toward the side direction of the vehicle B, a first horizontal drain pipe 350b horizontally provided in the downward direction of the drain channel 330 by a predetermined length, and a first inclined drain pipe 350c provided by having a predetermined inclination angle in the downward direction of the drain channel 330 may be utilized as the drain pipes 350.

Furthermore, as shown in FIG. 13, the vertical drain pipe 350v provided in a vertically downward direction of the drain channel 330 or the condensate water chamber 340 may be utilized as the drain pipes 350.

Furthermore, as shown in FIG. 14, a second horizontal drain pipe 350d horizontally provided in the condensate water chamber 340 or a second inclined drain pipe 350e provided by having a predetermined inclination angle in the condensate water chamber 340 may be utilized as the drain pipes 350 so as to drain the condensate water in the front and rear directions of the vehicle from the respective condensate water chambers 340 provided in the front and rear directions of the vehicle.

## Claims

1. A drain pan structure of a bus air conditioner for preventing overflow of condensate water, the drain pan structure having a drain pan storing and draining condensate water generated from an evaporator installed in a casing of the bus air conditioner, the drain pan comprising:
a bottom plate provided at a position below the evaporator, the bottom plate including: an inclined portion having at least one surface having at least one downward inclination; and
a drain channel formed by extending to distal ends of a side direction of the bottom plate such that height of the drain channel is lowest at the distal ends of the side direction of the bottom plate so as to move the condensate water drained from the bottom plate, in a drain direction of the condensate water.

2. The drain pan structure of claim 1, wherein the inclined portion includes:
a front inclined portion configured such that the bottom plate is downwardly inclined in a side direction or a front direction of a vehicle; and
a rear inclined portion configured such that the bottom plate is downwardly inclined in the side direction or a rear direction of the vehicle.

3. The drain pan structure of claim 2, wherein each of the front and rear inclined portions includes: a first inclined portion, a second inclined portion, and a third inclined portion, wherein
the first inclined portions of the front and rear inclined portions respectively have a first front inclined portion and a first rear inclined portion which are configured such that the bottom plate has a predetermined inclination in any one of left and right directions of the vehicle;
the second inclined portions of the front and rear inclined portions respectively have a second front inclined portion and a second rear inclined portion, each having a ridgeline on a middle of the bottom plate, with downward inclination angles smaller than inclination angles of the first front and rear inclined portions, the second front and rear inclined portions being configured to have downward inclinations from the ridgeline in the front and rear directions of the vehicle, respectively; and
the third inclined portions of the front and rear inclined portions respectively have a third front inclined portion and a third rear inclined portion which have downward inclination angles larger than the inclination angles of the first front and rear inclined portions, the third front and rear inclined portions extending from distal ends of the second front and rear inclined portions to the first front and rear inclined portions in the front and rear directions of the vehicle, respectively.

4. The drain pan structure of claim 1, further comprising:
a plurality of drain guides including:
partition guides vertically provided on an upper surface of the bottom plate by extending in a side direction of a vehicle; and
direction change guides extending from distal ends of the partition guides and being downwardly bent in a direction of the downward inclination of the inclined portion of the bottom plate.

5. The drain pan structure of claim 4, wherein the drain guides include:
a plurality of front drain guides provided on the front inclined portion by bending the direction change guides in a front direction of the vehicle; and
a plurality of rear drain guides provided on the rear inclined portion by bending the direction change guides in a rear direction of the vehicle.

6. The drain pan structure of claim 1, further comprising:
a condensate water chamber provided at each of opposite ends of the bottom plate, and configured in a stepped shape having a layer formed on a position below the first inclined portion so as to accommodate drained condensate water.

7. The drain pan structure of claim 1, further comprising:
at least one drain pipe for draining the condensate water of the condensate water chamber, the drain pipe being formed by any one of a horizontal drain pipe, an inclined drain pipe, and a vertical drain pipe depending on an inclination of the drain direction of the condensate water.
